# EUROPÄISCHE PATENTANMELDUNG

(11) **EP 1 243 687 A2**
(43) Veröffentlichungstag der Anmeldung: **25.09.2002**
(21) Anmeldenummer: 02005193.4
(22) Anmeldetag: 08.03.2002
(51) Int. Cl.: D06H 1/00, D06Q 1/10

(54) **Textilmaterial für Kleidungsstücke**

(30) Priorität: 14.03.2001 DE 10112122
(71) Anmelder: Deotexis Inc., New York, N.Y. 10022-4838 (US)
(72) Erfinder: Tebbe, Gerold, MC-98000 Monte Carlo (MC)
(74) Vertreter: Ostertag, Reinhard

(57) **Zusammenfassung**

Die Erfindung betrifft ein Textilmaterial für ein Kleidungsstück (10), das auf einer abgegrenzten Fläche, die auf dem Kleidungsstück später nach außen weisen soll und beispielsweise die Form einer eingetragenen Marke (12) aufweisen kann, Mikroteilchen in einem Bindemittel gebunden aufweist. Die Mikroteilchen verleihen dem Textilmaterial in der abgegrenzten Fläche ein verändertes Aussehen. Vorzugsweise enthalten sie fluoreszierende, phosphoreszierende, thermochrome oder fotochrome Farbstoffe. Die Mikroteilchen sollen dazu dienen, eine Nachahmung des Textilmaterials zu erschweren.

## Beschreibung

Die Erfindung betrifft ein Textilmaterial für Kleidungsstücke gemäß dem Oberbegriff von Anspruch 1.

Die Produktpiraterie auf dem Textilgebiet macht auch vor geschützten Stoffdesigns nicht Halt. Um das Originalprodukt zu schützen, wäre eine Kennzeichnung, ähnlich wie das Wasserzeichen bei Papier, wünschenswert, wobei diese schwierig nachzuahmen sein sollte.

Die vorliegende Erfindung hat sich dies zur Aufgabe gestellt.

Diese Aufgabe wird durch Anspruch 1 gelöst.

Erfindungsgemäß ist auf einer abgegrenzten Fläche ein Muster, welches z.B. die Form einer eingetragenen Marke annehmen kann, durch Mikroteilchen in einem Bindemittel auf das Textilmaterial aufgebracht. Gewöhnlich liegen die Mikroteilchen auf der später im Kleidungsstück nach außen weisenden Fläche des Materials vor, sie können aber auch auf der Innenseite vorliegen.

Diese Mikroteilchen sind so beschaffen, daß sie dem Textilmaterial in der abgegrenzten Fläche ein anderes Aussehen verleihen. Dies ist beispielsweise der Fall, wenn die Teilchen farblos, aber opak oder transparent auf einem farbigen Material vorliegen oder wenn sie eine andere Farbe als das Material aufweisen, z. B. eine Metallic-Farbe.

In den Unteransprüchen sind vorteilhafte Weiterbildungen der Erfindung angegeben.

Die Mikroteilchen können Keramik oder Glas umfassen (Anspruch 2), der bzw. dem eine Verbindung mit einem Farbeffekt zugegeben werden kann oder von Natur aus zugegeben ist, oder sie können einen transparenten Kunststoff umfassen (Anspruch 3), dem eine Verbindung mit einem Farbeffekt zugegeben werden kann.

Alternativ können die Mikroteilchen Mikrokapseln umfassen (Anspruch 4). Diese können einfach durch ihre Opazität, ihre Reflexion oder ggf. durch ihre Einfärbung der Fläche des Materials, auf der sie vorliegen, ein anderes Aussehen verleihen.

Bevorzugt enthalten die Mikroteilchen keine gewöhnlichen Farbstoffe, sondern fluoreszierende, phosphoreszierende, photochrome und/oder thermochrome Farbstoffe oder Pigmente (Anspruch 5).

Ein Textilmaterial gemäß Anspruch 6 ändert seine Farbe und/oder seine Farbstättigung, wenn es von einem Benutzer getragen wird. Insbesondere dann, wenn die Farbumschlagtemperatur so liegt, daß sie auch bei getragenem Kleidungsstück umschlagen kann, je nach dem, welche Raumtemperatur in der Umgebung des Kleidungsstückes herrscht, ergibt sich ein interessanter optischer Effekt. Man kann die Farbumschlagtemperatur auch gezielt so legen, daß die abgegrenzte Fläche augenfällig ist, wenn das Kleidungsstück nicht getragen wird, dagegen optisch zurücktritt, wenn das Kleidungsstück getragen wird.

Bei einem Textilmaterial gemäß Anspruch 7 ändert sich das Erscheinungsbild der Mikroteilchen aufweisenden abgegrenzten Fläche mit den Beleuchtungsverhältnissen. Wiederum kann man die Änderung der Farbe und/oder Farbstättigung der abgegrenzten Fläche so vorgeben, daß diese Fläche bei Standard-Beleuchtungsbedingungen ins Auge fällt oder auch so, daß sie nur bei Nicht-Standardbeleuchtungsverhältnissen auffällig ist.

Die Keramik- oder Glasmikrokügelchen enthalten dabei zweckmäßig anorganische fluoreszierende, phosphoreszierende, photochrome oder thermochrome Farbstoffe/Pigmente (Anspruch 8). Beispielsweise sind makroskopische Schmuckstücke (Ringe) aus Keramikmaterialien mit enthaltenen thermochromen Verbindungen bekannt, die unter dem Einfluß der Körperwärme ihre Farbe verändern. Photochrome (oder phototrope) Gläser sind z. B. als Brillengläser bekannt. Diese beiden letztgenannten Materialien sind als Mikroteilchen für die vorliegende Erfindung besonders geeignet, da ihre Nachahmung teuer ist und deshalb für billige Produktpiraterie-Erzeugnisse kaum in Frage kommen.

Wenn die Mikroteilchen einen transparenten Kunststoff, z.B. Acryl-Glas umfassen, handelt es sich bei den fluoreszierenden, phosphoreszierenden, photochromen oder thermochromen Farbstoffe/Pigmente zweckmäßig um organische Farbstoffe/Pigmente (Anspruch 9).

Wenn die Mikroteilchen Mikrokapseln sind und einen oder mehrere fluoreszierende, phosphoreszierende, photochrome oder thermochrome Farbstoffe enthalten, sind sie gewöhnlich von solcher Beschaffenheit, daß sie beim ersten Bügeln des Textilmaterials zerplatzen und den Farbstoff/das Pigment freisetzen (Anspruch 10), wobei der Farbstoff/das Pigment von der die Mikrokapseln umgebenden Bindemittelschicht aufgenommen wird und ggf. an das Gewebe weitergegeben wird. In diesem Fall kann der Farbstoff/ das Pigment anorganisch oder organisch sein, und fluoreszierende oder phosphoreszierende Farbstoffe/Pigmente werden bevorzugt.

Die Mikroteilchen werden bevorzugt mittels Siebdruckverfahrens auf das Textilmaterial aufgebracht (Anspruch 11).

Die Größe der Mikroteilchen liegt im allgemeinen in einem Bereich von 0,5 bis 500 µm (Anspruch 12).

Bei einem Textilmaterial gemäß Anspruch 13 kann die abgegrenzte Fläche durch Waschen des Kleidungstückes ausgewaschen werden. Dies ist in solchen Fällen von Interesse, in denen eine Garantiefunktion der abgegrenzten Fläche nur solange benötigt wird, bis das Kleidungsstück den Endverbraucher erreicht hat. Nach dem ersten Waschen stellt sich das Kleidungsstück unmarkiert dar.

Bei einem Textilmaterial gemäß Anspruch 14 kann der Endbenutzer entscheiden, ob er die Mikroteilchen durch Bügeln permanent mit dem Textilmaterial verbinden will oder nicht.

Bei einem Textilmaterial gemäß Anspruch 15 ist die durch Mikroteilchen markierte Fläche ästhetisch besonders ansprechend.

Bei einem Textilmaterial gemäß Anspruch 16 läßt sich die abgegrenzte Fläche mit einem photographischen Bild versehen.

Hierbei ergeben sich bei einem Textilmaterial gemäß Anspruch 17 besonders reizvolle optische Effekte, da die markierte Fläche ein Hologramm darstellt. Insbesondere in Verwendung mit aus Glas gefertigten Mikroteilchen ergeben sich ästhetisch ansprechende und charakteristische Hologramm-Reflexionen.

Mit der Weiterbildung der Erfindung gemäß Anspruch 18 ist gewährleistet, daß die Mikrokapseln durch das Rakel der Siebdruckvorrichtung nicht zerstört wird, wenn letzteres die Drucktinte durch das Sieb drückt. Dies ist insbesondere beim Endlossiebdruck und beim Rotationssiebdruck von Vorteil, da bei diesen Druckverfahren das Rakel unter starkem Druck auf dem Sieb läuft.

Die Erfindung wird nun anhand von Beispielen mit Bezug auf die Zeichnung näher beschrieben, in der
- Figur 1:: ein Hemd zeigt, das aus einem erfindungsgemäßen Textilmaterial gefertigt ist;
- Figur 2:: eine vergrößerte Aufsicht auf einen Abschnitt einer Mikroteilchen umfassenden Fläche eines Kleidungsstückes;
- Figur 3:: eine schematische Ansicht des in Figur 2 gezeigten Gewebestückes nach Wärmebehandlung durch Bügeln;
- Figur 4:: eine ähnliche Ansicht wie Figur 2, in welcher ein Ausschnitt aus einem flexiblen Hologramm wiedergegeben ist, welches Teil einer Hologrammmarke eines Kleidungsstückes ist; und
- Figur 5:: einen Ausschnitt aus einer Mikrokapseln enthaltenden Drucktinte.

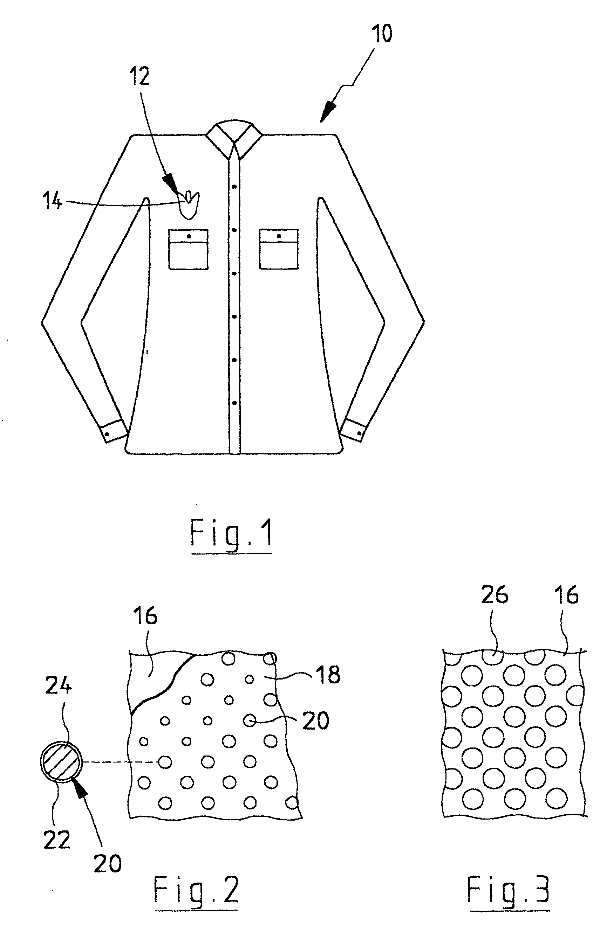

In Figur 1 bezeichnet 10 ein Hemd. Dieses ist aus einem Textilmaterial gefertigt, das ein Emblem 12 aufweist, welches aus Mikroteilchen 14 gebildet ist. In diesem Beispiel kann es sich um thermochrome Keramik-Mikroteilchen handeln, die beim Kontakt mit dem warmen Körper ihre Farbe wechseln.

Unter thermochromen Mikroteilchen sollen auch solche Mikroteilchen verstanden werden, bei denen sich die Farbstättigung in Abhängigkeit von der Umgebungstemperatur ändert.

Vorzugszweise werden die Mikroteilchen 14 so gewählt, daß ihr Farbumschlagpunkt zur Standard-Körpertemperatur eines von einem Benutzer getragenen Kleidungsstückes korreliert ist.

Die Korrelation kann so getroffen werden, daß die Farbe der Mikroteilchen dann, wenn das Kleidungsstück vom Benutzer getragen wird, weniger intensiv und/oder weniger auffällig ist als dann, wenn das Kleidungsstück nicht getragen wird. Man hat dann für den Benutzer einen eindeutigen Hinweis auf die Echtheit des Kleidungsstückes, der insbesondere im Laden gut sichtbar ist. Dieser Hinweis wird dann aber weniger auffällig und dezenter, wenn das Kleidungsstück getragen wird.

Umgekehrt dann man die thermochromen Mikroteilchen 14 aber auch so wählen, daß die durch die abgegrenzte Fläche aus Mikroteilchen gebildete Marke deutlicher sichtbar wird, wenn das Kleidungsstück getragen wird.

Schließlich kann man die Farbumschlagtemperatur auch so einstellen, daß sie bei getragenem Kleidungsstück gerade eben erreicht oder gerade eben noch nicht erreicht ist. Die thermochromen Mikroteilchen werden dann ihr Aussehen in Anhängigkeit von der Umgebungstemperatur ändern, wodurch sich interessante optische Effekte beim Tragen des Kleidungsstückes ergeben.

Anstelle von thermochromen Mikroteilchen kann man auch photochrome Mikroteilchen verwenden, die in Abhängigkeit vom Umgebungslicht ihre Farbe und/oder ihre Farbsättigung ändern. Wieder kann man die photochromen Mikroteilchen so aussuchen, daß sie unter Standard-Beleuchtungsbedingungen die abgegrenzte Fläche aus Mikroteilchen deutlich erkennen lassen, oder auch so, daß die abgegrenzte Fläche aus Mikroteilchen gerade dann gut sichtbar ist, wenn keine Standard-Beleuchtungsbedingungen treffen.

Alternativ kann man Mikroteilchen verwenden, die fluoreszierende oder phosphreszierende Materialien enthalten. Dabei kann es sich um anorganische Leuchtstoffe oder organische Leuchtstoffe handeln.

Die fluoreszierenden oder phosphoreszierenden Materialien können so gewählt sein, daß sie nur durch UV-Licht angeregt werden, so daß einerseits eine Echtheitskontrolle anhand der Mikroteilchen umfassenden abgegrenzten Fläche möglich ist, andererseits aber das Aussehen des Kleidungsstückes unter Normalbedingungen nicht auffällig ist.

Die eigentlichen markierenden Substanzen können bei weiter abgewandelten Mikroteilchen in die Kapselwand einer Mikrokugel eingeschlossen sein. Die Verwendung von Mikrokugeln erlaubt auch die Verwendung solcher optisch markierender Substanzen, die sich unter Wärmezufuhr verflüchtigen (Sublimation) oder in ihrer optischen Qualität verschlechtern (insbesondere durch Sauerstoffeinfluß). Auch kann man in Mikrokapseln eingeschlossen auch flüssige farbaktive Substanzen verwenden, die ansonsten ausscheiden würden.

In all den vorgenannten Fällen kann man die Mikroteilchen unter Verwendung eines Bindemittels mit dem Textilmaterial verbinden. Man wird so in der Wahl der Mikroteilchen freier, da diese nicht selbst für eine Bindung zum Textilmaterial zu sorgen brauchen.

Die Verwendung eines Bindemittels gibt auch einen Parameter vor, durch welchen die Verbindung der Mikroteilchen mit dem Textilmaterial gesteuert werden kann. So kann man z.B. ein Bindemittel auswählen, welches gegenüber Wasser nicht beständig ist, zumindest nicht gegen warmes und ein Waschmittel enthaltendes Wasser. Damit läßt sich dann auf einem Kleidungsstück durch Mikroteilchen eine Garantiemarke aufbringen, die vom Benutzer ausgewaschen werden kann, wenn sie ihre Funktion erfüllt hat.

Umgekehrt kann man das Bindemittel aber auch so wählen, daß es dann, wenn der Benutzer dies wünscht, die Mikroteilchen bleibend mit dem Textilmaterial verbindet. Denkbar sind hier strahlungshärtende Bindemittel oder thermoplastische Komponenten umfassende Bindemittel, die durch Wärmeeinwirkung (z.B. Bügeln) bleibend mit dem textilen Grundmaterial verbunden werden können.

Das Erzeugen der Mikroteilchen aufweisenden abgrenzten Fläche kann durch bekannte Druckverfahren erfolgen, insbesondere durch Siebdruck. Die abgegrenzte Fläche braucht keine geschlossene Umrandung aufzuweisen. Streifenmförmige Muster sind gleichermaßen denkbar. Die abgegrenzte Fläche braucht am Kleidungsstück auch unter Normalbedingungen nicht sichtbar zu sein. Man kann die Garantiefunktion übernehmenden abgegrenzten Flächen auch in Bereichen des Kleidungsstückes vorsehen, die unter normalen Tragebedingungen nicht sichtbar sind, z.B. im unteren Abschnitt eines Hemdes.

Vorzugsweise haben die optisch aktiven Mikroteilchen einen Durchmesser im Bereich von etwa 0,5 bis 500 µm. Derartige Mikroteilchen eigenen sich gut für den Siebdruck und geben auf dem Textilmaterial quasi homogene Flächen.

Optisch aktiv im Sinne der vorliegenden Erfindung sind alle Mikroteilchen, die andere optische Eigenschaften aufweisen als das textile Grundmaterial. Im einfachsten Falle kann es sich einfach um kleine Glaspartikel handeln, die durch ihre Reflexe wirken. Sind derartige Glaspartikel in eine transparente Bindemittelmatrix eingebettet, so wirken sie durch matten Glanz in zurückhaltender Weise.

Figur 2 zeigt ein textiles Grundmaterial 16, welches über eine Bindemittelschicht 18 Mikrokapseln 20 trägt, deren Kapselwand 22 aus bei Wärmeeinwirkung (z.B. für das jeweilige Gewebe vorgesehener Bügeltemperatur) zerstört wird. Ins Innere der Kapselwand 22 ist beim hier betrachteten Ausführungsbeispiel ein sublimierbarer Farbstoff 24 eingeschlossen.

Wünscht der Benutzer kein Qualitätssiegel auf seinem Kleidungsstück, so kann er das Kleidungsstück waschen und mit der auswaschbaren Bindemittelschicht 18 werden auch die Mikrokugeln 20 ausgewaschen. Das Kleidungsstück präsentiert sich dann neutral.

Wünscht der Benutzer dagegen einen Herkunftshinweis auf dem Kleidungsstück zu behalten, so bügelt der Benutzer das Emblem 12 vor dem ersten Waschen. Hierdurch werden die Kapselwände 22 zerstört und der im Inneren der Mikrokapseln 20 enthaltende sublimierbare Farbstoff 24 kommt in die Bindemittelschicht 18 und von dort in das textile Grundmaterial 16. Bei der Thermosublimierung erhält man so im Grundmaterial 16 vergrößerten Durchmesser aufweisende Bilder der einzelnen Mikrokugeln, die in Figur 3 bei 26 gezeigt sind. Nach dem Auswaschen der Bindemittelschicht 18 hat man dann eine im Bereich des Emblems 12 vorliegende Färbung des Kleidungsstückes.

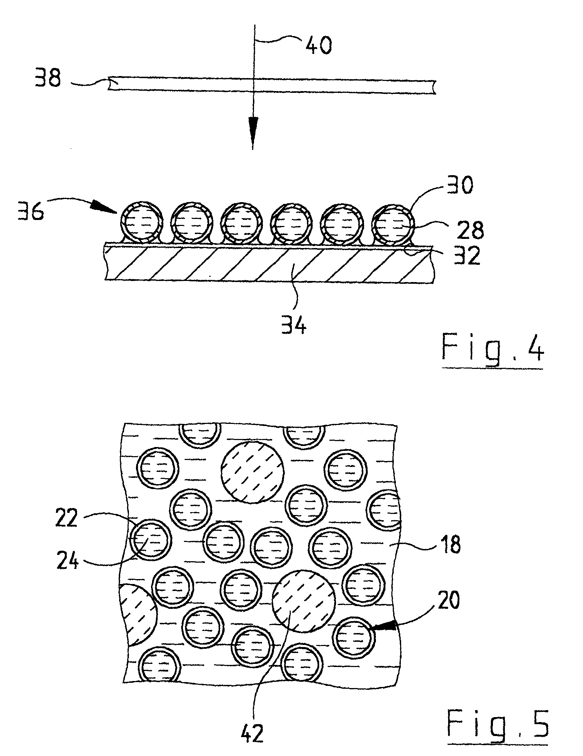

Ein besonders sicheres Emblem 12 stellt ein flexibles Hologramm dar. Ein solches kann man wie in Figur 4 gezeigt realisieren.

Es werden aus Glas Mikrokugeln 28 hergestellt. Diese werden mit einer lichtempfindlichen Schicht 30 umgeben, die zugleich die Funktion einer Bindemittelschicht erfüllen kann. Die so beschichteten Glaskugeln 28 werden im noch klebrigen Zustand auf eine Bindemittelschicht 32 aufgebracht, mit welcher ein textiles Grundmaterial 34 versehen wurde.

Die lichtempfindliche Schicht 30 kann z.B. in üblicher Weise Silberverbindungen enthalten. Das Grundmaterial der Schicht 30 wird so ausgewählt, daß es gut transparent ist. Ähnliche Grundmaterialien für lichtempfindliche Schichten werden bei Farbumkehrfilmen verwendet.

Wie aus Figur 4 ersichtlich, bilden die lichtempfindliche Schichten 30 tragenden Glaskugeln 28 eine im wesentlichen durchgehende Kugelschicht 36, die ähnlich belichtet werden kann wie eine Filmschicht. Das Belichten der Kugelschicht 36 erfolgt unter Verwendung eines holographischen Masters 38 unter Verwendung von schematisch dargestelltem monochromatischem Licht 40.

Nach der Belichtung werden die lichtempfindlichen Beschichtungen 30 entwickelt und fixiert, wie üblich. Danach bildet die Kugelschicht 36 ein flexibles Hologramm mit dem sich aus dem holographischen Master 38 ergebenden Muster.

Dieses Hologramm ändert das an ihm entstehende Lichtmuster mit der jeweiligen Lage des Hologrammes auf dem Benutzer. Er ergeben sich so bei Verformungen des Kleidungsstückes, wie sie beim Tragen ständig auftreten, interessante optische Effekte.

Als Wandmaterial für Mikrokapseln und als Bindemittel sind Acrylate besonders geeignet, da sie gute Transparenz, gute Bindemitteleigenschaften und - falls gewünscht - gute Temperaturbeständigkeit aufweisen.

Es versteht sich, daß man in weitere Abwandlung auch Mischungen von Mikroteilchen und Mikrokugeln verwenden kann, wie sie oben beschrieben wurden, um Kombinationen der mit diesen erhaltenen oben beschriebenen Effekte zu erzielen.

Zum Aufdrucken von Mikrokapseln im Rotationssiebdruck oder Endlosssiebdruck (und bei emfpindlichen Mikrokapseln ggf. auch im Flachsiebdruck) verwendet man vorzugsweise eine Drucktinte, wie sie in Figur 5 dargestellt ist: Im flüssigen Bindemittel 18 sind neben den Mikrokapseln 20 sphärische Schutzkörper 42 vorgesehen, welche größeren Durchmesser haben als die Mikrokapseln 20. Liegt der Durchmesser der letzteren bei etwa 6 µm, so kann der Durchmesser der Schutzkörper 42 bei etwa 10 µm liegen. Die Schutzkörper 42 nehmen die Last des Rakels auf und verhindern so, daß das Rakel unter seiner Anpresskraft die Mikrokugeln zerdrückt.

Die Schutzkörper 42 sind massiv und vorzugsweise aus einem transparenten Material wie Glas oder Acrylglas hergestllt.

Die Konzentration der Schutzkörper ist so groß gewählt, daß das steife Rakel überwiegend auf Schutzkörpern läuft, indem es immer an einigen beabstandeten Punkten durch Schutzkörper abgestützt ist.

## Patentansprüche

1. Textilmaterial für ein Kleidungsstück, **dadurch gekennzeichnet,**
**daß** es auf einer abgegrenzten Fläche Mikroteilchen aufweist, die durch ein Bindemittel gebunden sind, und daß die Mikroteilchen dem Material in der abgegrenzten Fläche ein verändertes Aussehen verleihen.

2. Textilmaterial nach Anspruch 1, **dadurch gekennzeichnet,**
**daß** die Mikroteilchen Keramik oder Glas umfassen.

3. Textilmaterial nach Anspruch 1, **dadurch gekennzeichnet,**
**daß** die Mikroteilchen einen transparenten Kunststoff umfassen.

4. Textilmaterial nach Anspruch 1, **dadurch gekennzeichnet,**
**daß** die Mikroteilchen Mikrokapseln umfassen.

5. Textilmaterial nach einem der Ansprüche 1 bis 4,
**dadurch gekennzeichnet, daß** die Mikroteilchen eine chemische Verbindung enthalten, die ausgewählt ist aus einer fluoreszierenden Verbindung, einer phosphoreszierenden Verbindung, einer thermochromen Verbindung, einer photochromen Verbindung und deren Mischungen.

6. Textilmaterial nach Anspruch 5, **dadurch gekennzeichnet,**
**daß** die thermochrome Verbindung bei einer Temperatur zwischen 20° C und 40° C, vorzugsweise zwischen 25° C und 30° C ihre Farbe ändert.

7. Textilmaterial nach Anspruch 5, **dadurch gekennzeichnet,**
**daß** die photochrome Verbindung bei Tageslicht und Kunstlicht unterschiedliche Farbe und/oder unterschiedliche Farbsättigung aufweist.

8. Textilmaterial nach Ansprüche 5 bis 7 in Verbindung mit
Anspruch 2, **dadurch gekennzeichnet, daß** die chemische Verbindung eine anorganische Verbindung ist.

9. Textilmaterial nach einem der Ansprüche 5 bis 7 in
Verbindung mit Anspruch 3, **dadurch gekennzeichnet, daß** die chemische Verbindung eine organische Verbindung ist.

10. Textilmaterial nach einem der Ansprüche 5 bis 9,
**dadurch gekennzeichnet, daß** die Mikroteilchen beim Bügeln des Textilmaterials die chemische Verbindung freisetzen.

11. Textilmaterial nach einem der Ansprüche 1 bis 10,
**dadurch gekennzeichnet, daß** die Mikroteilchen durch Siebdruck aufgebracht sind.

12. Textilmaterial nach einem der Ansprüche 1 bis 11,
**dadurch gekennzeichnet, daß** die Mikroteilchen eine Größe im Bereich von 0,5 bis 500 µm aufweisen.

13. Textilmaterial nach einem der Ansprüche 1 bis 12,
**dadurch gekennzeichnet, daß** das Bindemittel und/oder die Mikroteilchen auswaschbar sind.

14. Textilmaterial nach einem der Ansprüche 1 bis 13,
**dadurch gekennzeichnet, daß** die Mikroteilchen thermoplastisches Material aufweisen.

15. Textilmaterial nach einem der Ansprüche 1 bis 14,
**dadurch gekennzeichnet, daß** die Mikroteilchen ein Metallpigment aufweisen.

16. Textilmaterial nach einem der Ansprüche 1 bis 15,
**dadurch gekennzeichnet, daß** die Mikroteilchen von einer belichteten photographischen Schicht zumindest teilweise überdeckt sind.

17. Textilmaterial nach Anspruch 16, **dadurch gekennzeichnet,**
**daß** die photographische Schicht unter Verwendung eines Hologrammes belichtet wurde.

18. Textilmaterial nach einem der Ansprüche 4 bis 15,
**dadurch gekennzeichnet, daß** die Mikrokapseln (20) zusammen mit massiven Schutzkörpern (21), welche größeren Durchmesser haben als die Mikrokapseln (42), im Siebdruck, insbesondere im Endlossiebdruck oder Rotationssiebdruck aufgedruckt sind.
